# EUROPEAN PATENT SPECIFICATION

(11) **EP 2 487 026 B1**
(45) Date of publication and mention of the grant of the patent: **06.11.2019**
(21) Application number: 12155436.4
(22) Date of filing: 14.02.2012
(51) Int. Cl.: B29L 31/14, B29C 45/14

(54) **Tool and use method thereof**
Werkzeug und Verwendungsverfahren davon
Outil et son procédé d'utilisation

(30) Priority: 14.02.2011 GB 201102553
(43) Date of publication of application: 15.08.2012
(73) Proprietor: Fenchurch Environmental Group Limited, Warrington, Cheshire WA4 5LF (GB)
(72) Inventor: Wood, Frederick Ian, Warrington, WA4 5LF (GB)
(74) Representative: Manley, Nicholas Michael

(56) References cited:
- DE-C1- 10 062 423
- JP-A- S6 475 021
- JP-A- S63 306 266

## Description

This invention relates to mould tools and in particular, but without limitation, to mould tools suitable for use in insert moulding.

Injection moulding is a well-known manufacturing technique, which readily lends itself to mass production of plastics items. Injection moulding generally involves providing a mould tool having an internal cavity that can be filled by injecting a liquid polymer into it. The polymer is then allowed to set, and the set polymer, whose shape corresponds to that of the mould cavity, is removed from the mould. To enable the manufactured component to be removed from the mould, the mould usually comprises a plurality of mould pieces that can be sealingly clamped together to form a mould cavity of the desired shape. By separating the mould pieces, the manufactured component is exposed and can be released from the mould - normally using mechanised ejector pins.

It is crucial that the mould pieces form a good seal with one another or else liquid polymer can seep along the interface between the mould pieces, thereby forming "flashing", which must be removed in a post-manufacturing process. Clearly, reducing or eliminating flashing is a desirable objective because to do so reduces or removes the need for additional process steps.

Since the mould pieces of an injection moulding tool are normally manufactured of tool steel, it is difficult to form a seal between the mating surfaces thereof. Conventional practice is therefore to machine the mating surfaces of the mould pieces, near to where they intersect the mould cavity, to a highly flat, polished finish, and to clamp the mould pieces together tightly. If the mating surfaces are sufficiently flat, then a good seal will be formed therebetween. However, to overcome imperfections in the mating surfaces, high press-on forces are commonly used so that the tool pieces elastically deform which, in turn, causes the mating surfaces to mate intimately. This creates an improved seal and is satisfactory in most injection moulding operations.

One particular sub-class of injection moulding, insert-injection moulding or insert moulding, can be used where an injection moulding process is to be used to form a plastics part around the whole, or a part of, another object. One example of a co-injection moulded product is a gaming chip in which an annular plastics ring is formed around the periphery of a metal disc. In the case of a gaming chip, high press-on forces can be tolerated because the metal disc is unlikely to be adversely affected thereby, and because failure of the part would not necessarily have catastrophic consequences. However, this is not the case for all products, and it is those products, which are largely intolerant of high press-on forces, to which this invention is particularly applicable.

One example of an insert moulded product that can be intolerant of high press-on forces is a particle filter, e.g. for a face mask-type respirator, a vacuum cleaner, an air conditioning unit, a heating appliance, etc.. A particulate filter comprises a porous filter medium, such as a sheet of filter paper, surrounded by an integrally-formed peripheral annular support frame, commonly referred to as a "housing" or "casing".

The main functions of the housing are to provide physical support for the filter medium, to facilitate manual handling of the filter and to provide a means for sealingly connecting the periphery of the filter into a receiving aperture therefor.

The filter medium is commonly formed from a relatively thin sheet having an open porous structure, i.e. a structure in which the pores intersect one another. Air can thus flow through the filter, but contaminants are caught thereby. Sheet filters of this type are well-known, such as HEPA, foam, gauzes, filter papers etc.

Filter cartridges comprising a filter sheet and an integrally formed peripheral casing are well-known and various established and proven manufacturing techniques exist therefor. Our earlier UK patent GB2411367 (also published as EP1725317, US2007182062 and WO2005079951) describes a method of forming a filter cartridge and describes a mould tool which clamps to the filter sheet in a manner that defines the periphery of the casing. The mould tool in this case, comprises opposable tapering projections that bite into, and indent, the surface of the filter sheet to hold it firmly in place during the moulding process. The clamping action not only defines a sharp edge to the casing, but also helps to prevent polymer seepage during the moulding process, which would coat a portion of the surface of the filter sheet thereby reducing its efficacy and efficiency.

Empirical studies have shown that a relatively high pressure is often required (depending on the type of polymer being moulded and the nature of the filter sheet) for the tapered projections to form an effective seal against the filter sheet during the manufacturing process. A high contact pressure, however, can sometimes be disadvantageous because it can weaken or permanently deform the filter sheet. In extreme cases, high contact pressures can perforate the filter sheet, thereby enabling air, in use, to bypass the filter sheet. Perforations in the filter sheet can lead to reduced service life or catastrophic failure if the filter sheet is able to tear away from the casing.

A need therefore arises for a different and/or improved moulding process which reduces the risk of damaging the filter sheet during moulding, but which nevertheless enables a well-defined edge to the casing to be formed and which minimises seepage into or over the filter sheet.

DE 100 62 423 C1 discloses an injection moulding tool made from two opposing displaceable tool halves, for the production of plastic frames on pre-formed bellows for filter cassettes, with a comb-shaped row of teeth for clamping the longitudinal side edges of the bellows, during the injection process, arranged at a pre-determined folding angle and with terminal walls for clamping the end folds of the bellows during the process, whereby the terminal walls of the tool in the clamping region of the end folds are angled at the fold angle of the end folds.

JP S63-306266 discloses a filter member set between moulds. A flange at the outer circumference of the filter member is held between first annular projecting holding portions of the molds while a flange at the inner circumference of the filter is held by second annular projecting holding portions of the molds. Resin injected through a first gate passes through an injecting portion and forms a reinforcing portion and a coupling portion, while resin injected through a second gate passes through an injecting portion and forms a portion of a coupling portion. After injection, the resin is cooled and the filter member is removed from the molds.

JP S64-75021 discloses an air cleaner element comprising a plurality of filter paper unit members and a resin member and its external shape is formed into a circular form. The filter paper unit member is formed into a specified shape by corrugating sheet-like filter papers and cutting the outer periphery thereof by application of press working. Each of the folded filter paper unit members is inserted into a metal mold, where connecting portions, inner frame members and an outer frame member are formed by pouring resins therein to complete an air cleaner element. Since the connecting parts of the filter paper unit members and the inner and outer frame members are formed into a body, manufacturing processes can be simplified, omitting an adhesion process.

According to a first aspect of the invention, there is provided an insert mould tool for moulding an annular moulded portion onto an insert, the mould tool comprising a plurality of mould pieces and means for applying pressure to the mould pieces; each mould piece comprising complementarily shaped mating surfaces and being adapted to be assembled to define an annular mould cavity intersecting at least one mating surface for defining the shape of the moulded portion; wherein the mating surfaces, when the mould is closed, remain spaced apart by a distance which is the same as the thickness of the insert to define an insert-receiving cavity for receiving a portion of the insert; and wherein the insert-receiving cavity comprises a sealing portion extending radially inwardly and outwardly of the annular mould cavity for sealing receipt of a portion of the insert, the sealing portion being adapted, when pressure is applied to the mould pieces, to exert a substantially evenly distributed pressure across an area thereof and wherein the sealing portion comprises a non-linear, or areal, contact region.

According to a second aspect of the invention, there is provided a method of insert moulding, in particular a filter cartridge, comprising the steps of: providing a plurality of mould pieces each having: complementarily shaped mating surfaces and a mould cavity recess formed in at least one mating surface to define an annular mould cavity, wherein, when the mould is closed, the mating surfaces remain spaced apart by a distance which is the same as the thickness of the insert to define an insert-receiving cavity for receiving a portion of the insert, the insert-receiving cavity intersecting the mould cavity and comprising a sealing portion adapted to inhibit, in use, egress of moulding material from the mould cavity, the sealing portion extending radially inwardly and outwardly of the annular mould cavity for sealing receipt of a portion of the insert; locating an insert between the mould pieces; bringing the mould pieces into spaced apart juxtaposition on opposite sides of the insert with a portion of each mould piece's mating surface making areal contact with an upper or lower surface of the insert; applying a press-on force over the area of the mating surfaces in contact with the insert; and at least partially filling the mould cavity with a solidifiable liquid polymer; allowing the polymer to solidify; and removing the filter cartridge from the mould tool.

Also disclosed herein is a filter cartridge manufactured by a method or using a mould tool as herein described.

The invention therefore enables the peripheral edge of the insert to be encapsulated in the annular moulded portion, which removes the need for the insert to be sealingly affixed to the annular moulded portion using a glue line.

In a conventional insert moulding tool, there are provided opposable ribs or ridges that clamp together with the filter sheet therebetween. The ribs of ridges of a conventional insert moulding tool are relatively narrow so as to minimise their surface area, and thus maximise the contact pressure for a given unit of press-on force (pressure being force per unit area). As such, the contact region of the ridges or ribs of a known insert mould tool is relatively narrow, or linear, i.e. being relatively long and relatively narrow. Such a configuration has hitherto been generally accepted as optimal because it enables there to be a relatively high pressure contact region (which facilitates sealing) for a relatively low press-on force (which reduces wear and the cost of building/operating the tool).

In the present invention, however, the sealing portion comprises a non-linear contact region, that is to say a relatively non-linear or relatively wide area that is in contact with the insert when the mould pieces are pressed together. Additionally or alternatively, the sealing portion may comprise an area over which a substantially evenly distributed pressure is applied to the insert when the mould pieces are pressed together.

As previously stated, established wisdom in the insert moulding art calls for a relatively high pressure to be applied to opposite faces of the filter sheet to form a seal. Surprisingly, however, it has been discovered that a much lower contact pressure, i.e. a similar or lower force, but applied over a much larger area of the filter sheet, can nevertheless form an adequate seal whilst maintaining a sharp edge to the casing during moulding. Advantageously, by distributing the force applied to the sheet filter over a larger area, a sufficiently high press-on force can be applied to create a seal, however, because the force is distributed over a much larger area of the insert, the pressure applied to the insert, and hence the potential for damage to be caused thereto, is reduced. Moreover, because the press-on force is applied over a relatively large area, there is a reduced likelihood of the contact regions exerting a shear or slicing stress to the insert.

It is believed that the incidence of flashing is influenced by the selection of press-on forces. In particular, it is believed that the high press-on forces of a conventional insert moulding tool can actually encourage flashing.The invention runs counter to well-established principles because it relies on the appropriate selection of contact area, press-on force, opposing contact area separation, insert thickness and injection pressure to form an adequate seal and so to reduce or eliminate flashing.

The contact area may be flat or curved, provided it is areal, rather than linear. The contact area may be ribbed, ridged or undulating, in which case complementary contact area regions of the opposing mould pieces are preferably complementarily shaped so as to exert an areal press-on force to the insert.

Preferred embodiments of the invention shall now be described, by way of example only, with reference to the accompanying drawings in which:
Figures 1 to 4 are schematic cross-sections through an embodiment of a mould tool according to the invention, in which:
Figure 1 is a schematic cross-section through a closed and empty mould tool according to the invention;
Figure 2 is a schematic cross-section through the mould tool of Figure 1 in an open configuration and with a pleated insert located on the lower part thereof;
Figure 3 is a schematic cross-section through the mould tool of Figure 1 in an closed configuration with the pleated insert located between the opposing mould pieces;
Figure 4 is a schematic partial cross-section through the mould tool of Figure 1 after the moulding process showing the pleated insert and its integrally formed peripheral casing;
Figure 5 is a perspective view of a first a mould tool piece according to the invention;
Figure 6 is a perspective view of a second mould tool piece complementary to that shown in Figure 5;
Figure 7 is a perspective view of a filter cartridge manufactured using the method and mould tool of the invention; and
Figures 8 to 17 are a sequence showing how filter inserts are cut to shape, handled and inserted into a mould tool according to the invention.

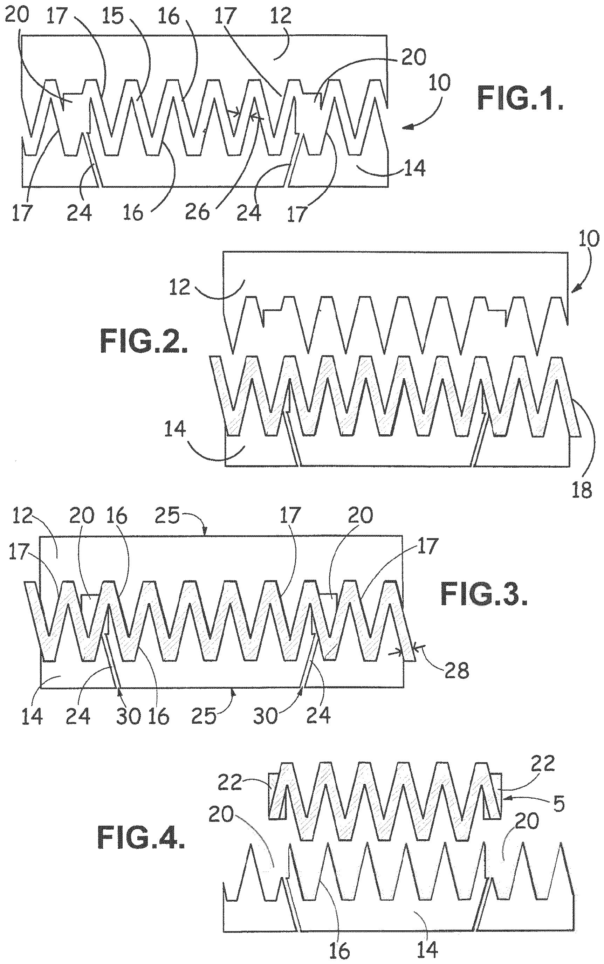

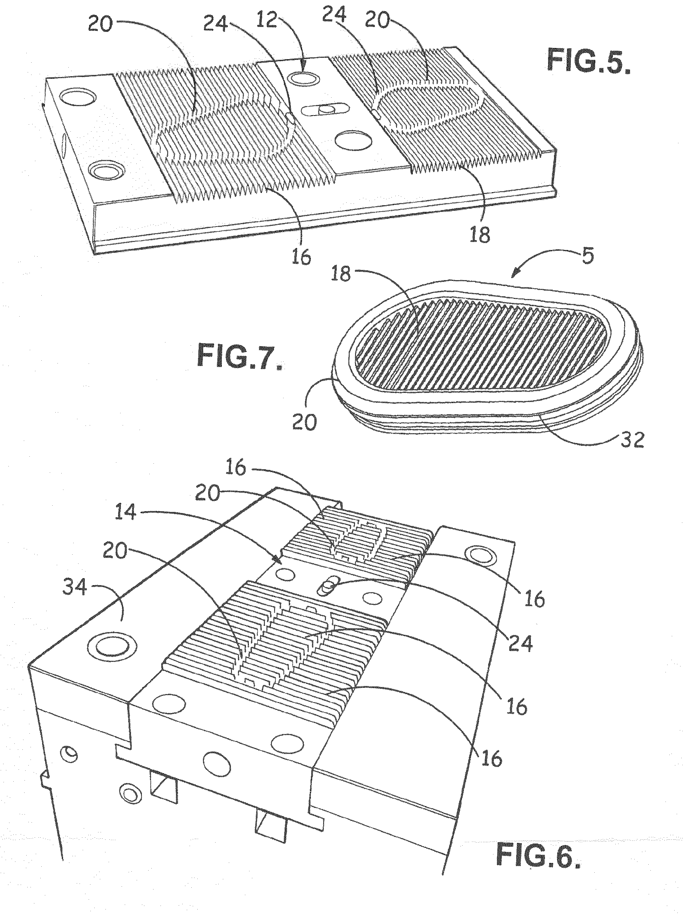

In Figure 1, a mould tool 10 is shown that is suitable for manufacturing a respirator filter cartridge 5 comprising a pleated filter sheet 18 and an integrally formed peripheral frame housing 22 such as that shown in Figure 7.

The mould tool 10 comprises upper 12 and lower 14 mould pieces each manufactured from a single machined block of tool steel. The mould pieces 12, 14 are complementarily shaped and movable into spaced-apart juxtaposition (as shown) so as to form an insert mould tool 10. In practice, the lower mould piece 14 is mounted on a fixed platen (not shown) and the upper mould piece 12 is mounted on hydraulic rams (not shown) so as to be movable relative to the lower mould piece 14.

The mould pieces are sufficiently rigid that when pressed together, the force exerted by the rams is evenly distributed throughout the bulk of the material of each tool piece. By carefully designing and machining the geometry of the mating surfaces, the pressure distribution (i.e. the proportion of the press-on force transferred to different areas of the mating surfaces) can be adjusted for different portions of the mating surfaces. Given that the tool material elastically deforms under compressive stress, "high spots" (which make contact sooner during press-on) will transfer a greater proportion of the compressive stress than "low spots" (which make contact infinitesimally later during press-on), or areas that have been machined so as to never come into contact with the opposing mating surface (e.g. the interior of the mould cavity).

In the present invention, the depth and/or geometry of the insert-receiving cavity is carefully designed so that specific levels of stress are applied to specific areas of the insert during press-on.

Each mould piece comprises a notional mating surface 16, which is complementarily shaped with the notional mating surface 16 of the opposite mould piece. The notional mating surfaces have areas that make contact with the opposing mating surface, in use, and areas that do not mate at all, due to the presence of cavities/recesses formed therein. Nevertheless, the term "mating surface" is used, by custom, and herein, to refer to the shaped/working surface of the mould tool, whether or not it actually mates, in use, with an opposing surface, or makes contact with the insert.

The mating surfaces 16 can take any shape, and are normally flat, but in the example shown comprise a series of interdigitated, v-shaped ribs and grooves to accommodate a pleated insert sheet 18.

A mould cavity 20 has been machined into the mating surface 16 of each mould piece 12, 14, whose interior shape will define the exterior shape of the injection-moulded peripheral casing 22. The mould cavity 20 is a continuous ring (see Figures 5 & 6), although this cannot be easily appreciated from a cross-sectional view. A number of inlet ports 24 are provided that communicate with the interior of the mould cavity and it is through these inlet ports 24 that liquid polymer is injected under pressure (in a conventional manner) to form the peripheral casing 22.

Figures 2 to 4 show how a filter cartridge 5 is manufactured. In Figure 2, the mould tool 10 is opened up by separating the upper 12 and lower 14 mould pieces, and a sheet of pleated filter paper 18 is placed onto the lower mould piece 14. It will be noted that the insert 18 has been pleated in a manner such that the pleats fit snugly into the grooves of the lower mould piece 14. As shown in Figure 3, the mould tool 10 is then closed by lowering the upper mould piece 12 so that its mating surface 16 contacts the upper surface of the filter insert 18. A press-on force 25 is then applied to close the mould tool 10 and to cause the mating surfaces 16 of the mould pieces 12, 14 to contact the filter insert 18. However, unlike in a conventional insert mould tool, it will be noted that there are no nip ridges that concentrate the press on force 24 to narrow regions either side of the mould cavity 20, but rather the press-on force 25 is applied substantially uniformly over the entire area of the insert 18. Furthermore, it will be noted from Figure 1 that even when closed, the mating surfaces 16 of the mould pieces 12, 14 remain slightly spaced apart 26 to define an insert-receiving cavity 15, and so as to not significantly compress the insert 18. In a preferred embodiment of the invention, the inter-mating surface spacing 26 (i.e. the depth of the insert-receiving cavity 15) is substantially the same as the thickness 28 of the insert 18.

Once the mating surfaces 16 of the mould pieces 12, 14 have been brought into contact with opposite sides of the insert 18 a press-on force 25 is applied to form a seal. The seal is formed by an areal contact region 17 of the mating surfaces 16 coming into areal contact with the upper and lower surfaces of the insert 18. Since the insert-receiving cavity 13 intersects and extends on opposite sides of the mould cavity 20, there is an areal sealing portion 17 located on either side of the mould cavity that inhibits, in use, egress of moulding material from the mould cavity recess 20 over the surface of the insert 18.

Liquid polymer is then injected 30 into the mould cavity 20 via the inlet ports 24. The liquid polymer flows into and around the mould cavity 20 completely filling it and is allowed to solidify (e.g. by cooling, or via a chemical reaction) to form a solidified casing 22. Once set, the mould pieces 12, 14 can be separated and the filter cartridge 5 removed. A final processing step involves trimming off excess filter sheet 18 extending radially outwardly from the exterior of the casing 22.

Significant advantages of the invention include:
- The ability to manufacture filter cartridges 5 relatively easily and reproducibly with parallel-pleated filter sheets, rather than radially pleated filter sheets.
- The shape of the peripheral casing 22 can be made to any desired shape merely by changing the geometry of the mould cavity groove 20. This enables non-circular or non-rectangular filter cartridges 5 to be manufactured without undue additional effort or tooling expense.
- The shape of the filter cartridge 5 is not restricted by the geometry of the filter sheet 18 because the filter sheet 18 extends all the way through the mould cavity 20 and any excess is trimmed off. As such, the casing 22 is sealed to, and made integral with, the entire periphery of the filter sheet 18, which removes the need for a post-manufacturing sealing step, and removes any geometrical considerations that have hitherto been relevant in corner regions of insert moulded filter cartridges.

Figures 5 and 6 show, respectively, an upper 12 and a lower 14 mould tool piece in accordance with the invention. Identical features have been identified with identical reference signs as in Figures 1 to 4 for ease of reference. In Figures 5 and 6, each mould tool piece 12, 14 is suitable for manufacturing two filter cartridges simultaneously. As such, two mould cavities 20 have been machined into the contact region/mating surfaces 16 of the mould pieces. Additionally, the inlet ports 24 communicate with the mould cavities 20 via a sidewall thereof. Also shown in Figure 6 is a receiving platen 34 for the lower mould piece 14.

Finally, Figure 7 shows a filter cartridge 5 manufactured using a mould tool 10 according to the invention and foregoing description. Again, identical features have been identified using identical reference signs as in Figures 1 to 4 for ease of reference. The peripheral casing 20 has been manufactured from injection moulded silicone around a parallel-pleated HEPA sheet filter membrane. Notably, it will be seen that the exterior periphery of the casing comprises grooves 32 to enable the filter cartridge 5 to be sealingly receivable within a correspondingly shaped aperture of a respirator face mask (not shown). A notable advantage of the invention is the fact that casings 20 can be manufactured having irregular shapes. In the case of the filter 5 shown in Figure 7, it will be noted that the periphery of the casing 20 is indented 32 to enable the filter 5 to clip into, and sealingly connect with, the filter space (i.e. the hole in the face mask that accommodates the filter) to provide a secure seal. The invention enables this to be achieved using a single mould whereas previously such a configuration would have required a two-part moulding process - one for the casing itself, and a second operation to form the indentations.

One problem that is commonly encountered, especially with small and/or tightly-pleated filter inserts 18 is maintaining a uniform pleat pitch and preventing the pleats from becoming misaligned with respect to the corresponding undulations 16 of the mould tool 12, 14. This problem can become significant where a relatively rigid or elastic filter insert material is used, or where the creases are particularly tight.

In a conventional insert moulding operation, these issues can be alleviated by providing one or more longitudinal glue lines that span adjacent pleats to maintain them in a desired configuration. However, a glue line is often undesirable as it can detract from the aesthetics of the finished filter and also because they can partially "block" the media, thereby preventing airflow and/or reducing the effective size of the filtration area. The presence of a glue line is not so much of a problem with large filters, but with small ones the proportion of filtration area lost could be significant.

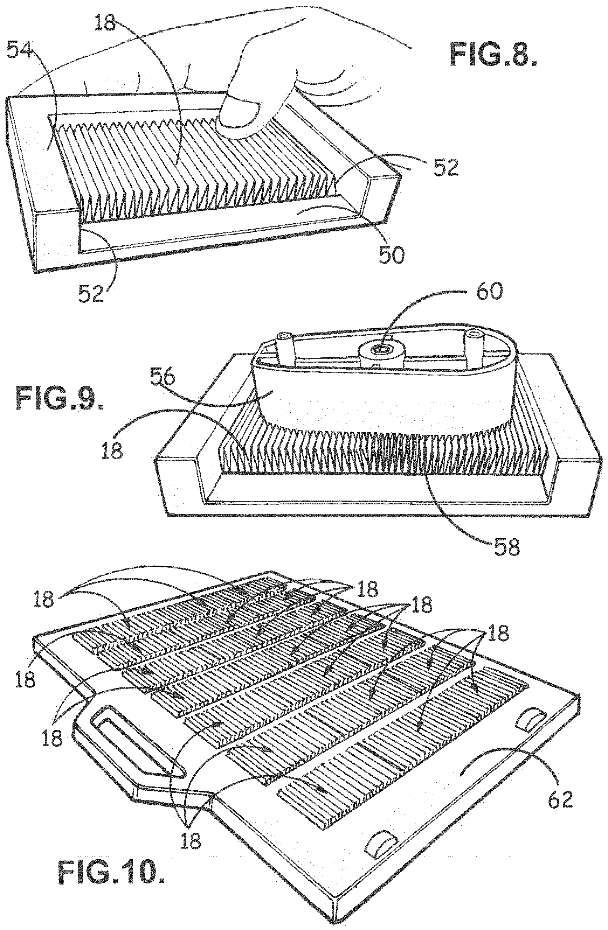

To address these issues, an alternate manufacturing methodology, also in accordance with the invention, is illustrated in Figures 8 to 17 as follows:
In Figure 8, a cut length of filter insert 18 is inserted into a flat-bottomed receiving jig 50 and stretched so that its ends 52 contact the end stops 54 of the receiving jig 50. As shown in Figure 9, a corrugated spreader jig 56 is then placed on top of the filter insert 18 with its corrugations 58 protruding into the "valleys" of the pleated filter insert 18 to ensure that the pitch of the pleats is uniform across the central region of the insert 18. The pleated filter insert 18 and spreader jig 56 is then inverted and an alignment aperture 60 of the spreader jig 56 is located on a locating pin (not shown) of a carrier tray 62.

A number of spreader jigs 56 and filter inserts 18 are laid out on the carrier tray 62 and the receiving jigs 50 removed, as shown in Figure 10.

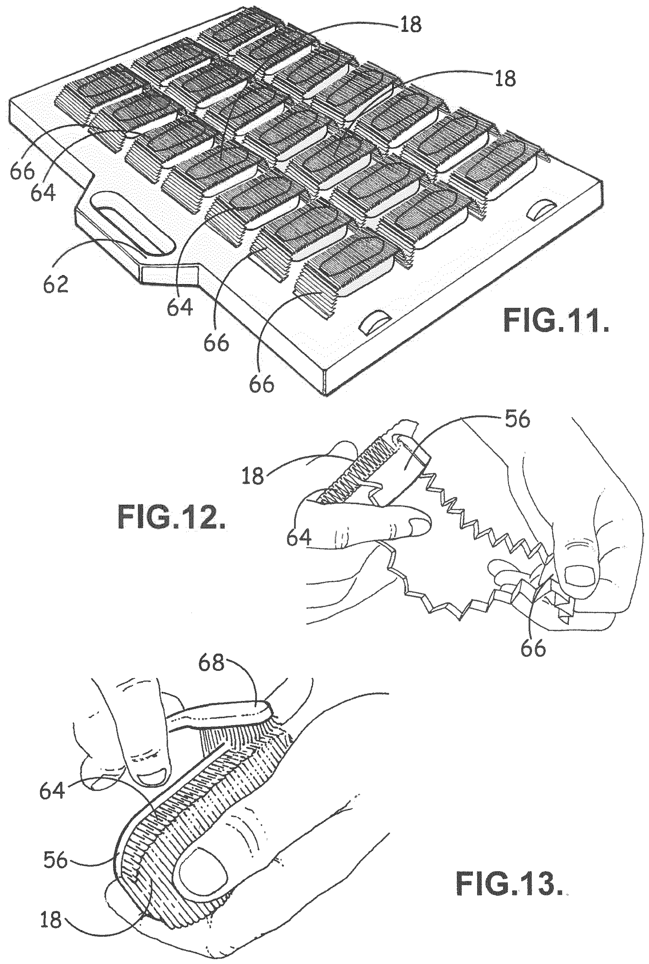

The carrier tray 62 is then placed into a laser cutting machine (not shown) and the outline 64 of each filter insert 18 is cut to a desired shape using a laser cutter (not shown). The laser cutting operation takes place in an inert atmosphere (e.g. nitrogen) to inhibit/prevent burning of the filter inserts 18. A carrier tray 62 containing a number of cut filter inserts is shown in Figure 11.

The filter inserts 18 and spreader jigs 56 are then removed from the carrier tray 62 and the excess filter media 66 surrounding the cut edge 64 of the filter insert 18 removed by hand (or machine), as shown in Figure 12.

A brush 68 is then used, as shown in Figure 13, to remove any dust or other particulate matter from the cut edge 64 of the filter insert 18 to aid adhesion of insert 18 to the moulded support frame 22 during the later injection moulding process.

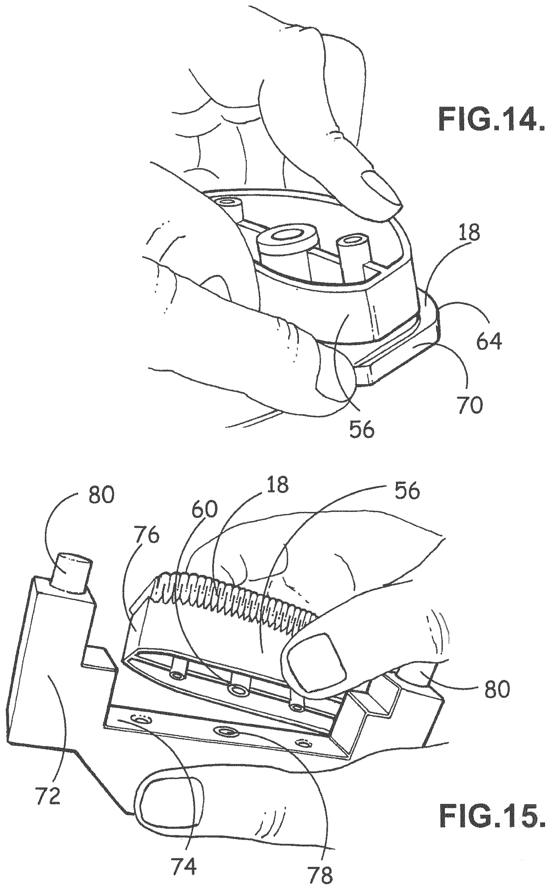

A final trimming operation, as shown in Figure 14, involves detaching the final pleat 70 from each end of the filter insert 18 so that the insert 18 does not protrude through the moulded housing 20 later on.

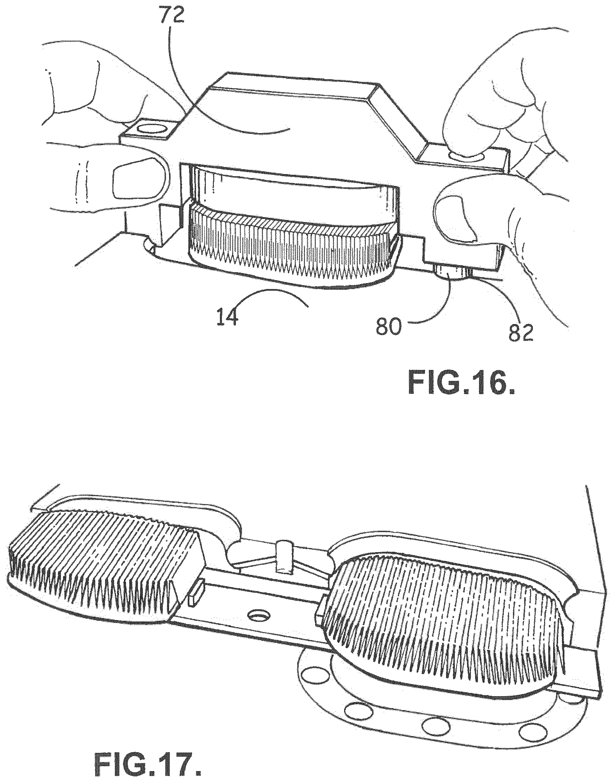

Figures 15 and 16 show how an alignment jig 72 is then used to locate the spreader jig 56 in the lower half 14 of the injection moulding tool 10. The alignment jig 72 comprises a generally U-shaped metal block having a recess 74 that engages the ends 76 of the spreader jig 56 and a through aperture 78 for receiving an alignment pin (not shown) that engages a corresponding blind hole 60 of the spreader jig 56. The alignment jig 72 additionally comprises a pair of elongate mould tool-engaging pins 80 that engage with corresponding apertures 82 of the injection moulding tool 14. As shown in Figure 16, the mould tool-engaging pins 80 of the alignment jig 72 can be lowered into the corresponding apertures 82 of the injection moulding tool 14 so that the pleats of the filter insert 18 correctly align with the undulations 16 of the lower portion 14 of the mould tool 10.

The alignment 72 and spreader jigs 56 can then be removed, as shown in Figure 17 to enable the moulding process to continue in a similar manner to that explained with regard to Figures 2 to 4 above.

The invention is not restricted to the details of the foregoing embodiments, which are merely exemplary. For example, the mating surfaces 16 need not lie in a substantially flat plane, but could be curved so as to form a three-dimensional filter cartridge 5. The inter-mating surface spacing 26 could be slightly less than the thickness 28 of the filter insert 18 so as to compress it slightly, albeit, uniformly. The mating surfaces 16 need not necessarily contact the entire area of the filter insert 18, provided they extend sufficiently inwardly and outwardly of the mould cavity so as to form an areal contact region.

## Claims

1. An insert mould tool (10) for moulding an annular moulded portion (22) onto an insert (18), the mould tool comprising a plurality of mould pieces (12, 14) and means for applying pressure (25) to the mould pieces;
each mould piece (12, 14) comprising complementarily shaped mating surfaces (16) and being adapted to be assembled to define an annular mould cavity (20) intersecting at least one mating surface for defining the shape of the moulded portion (22);
wherein the mating surfaces (16), when the mould is closed, remain spaced apart by a distance which is the same as the thickness (28) of the insert (18) to define an insert-receiving cavity (15) for receiving a portion of the insert; and wherein
the insert-receiving cavity (15) comprises a sealing portion (17) extending radially inwardly and outwardly of the annular mould cavity (20) for sealing receipt of a portion of the insert (18), the sealing portion being adapted, when pressure is applied to the mould pieces, to exert a substantially evenly distributed pressure across an area thereof and wherein the sealing portion (17) comprises a non-linear, or areal, contact region.

2. A mould tool as claimed in claim 1, wherein the substantially evenly distributed pressure is insufficient to significantly deform the insert (18).

3. A mould tool as claimed in any preceding claim, wherein the contact area (17) is ribbed, ridged or undulating.

4. A mould tool as claimed in claim 3, wherein the surface of the contact area (17) corresponds to the surface of a pleated insert.

5. A mould tool as claimed in claim 4, wherein the pleats are substantially parallel.

6. A mould tool as claimed in any preceding claim, wherein the mould pieces (12, 14) are movable into spaced-apart juxtaposition and wherein the insert receiving cavity (15) is formed by the space between the spaced-apart mating surfaces of the mould pieces.

7. A mould tool as claimed in any preceding claim, wherein the mould cavity (20) comprises a continuous ring.

8. A mould tool as claimed in any preceding claim, further comprising an inlet port (24) communicating with the interior of the mould cavity (15) through which solidifiable liquid polymer is injectable.

9. A method of insert moulding, in particular a filter cartridge (5), comprising the steps of:
providing a plurality of mould pieces (12, 14) each having: complementarily shaped mating surfaces (16) and a mould cavity recess formed in at least one mating surface to define an annular mould cavity (20), wherein, when the mould is closed, the mating surfaces (16) remain spaced apart by a distance which is the same as the thickness (28) of the insert (18) to define an insert-receiving cavity (15) for receiving a portion of the insert (18), the insert-receiving cavity (15) intersecting the mould cavity and comprising a sealing portion (17) adapted to inhibit, in use, egress of moulding material from the mould cavity, the sealing portion (17) extending radially inwardly and outwardly of the annular mould cavity (20) for sealing receipt of a portion of the insert (18);
locating an insert (18) between the mould pieces (12, 14);
bringing the mould pieces (12, 14) into spaced apart juxtaposition on opposite sides of the insert (18) with a portion of each mould piece's mating surface making areal contact with an upper or lower surface of the insert;
applying a press-on force over the area of the mating surfaces in contact with the insert (18); and
at least partially filling the mould cavity (20) with a solidifiable liquid polymer;
allowing the polymer to solidify; and
removing the filter cartridge (5) from the mould tool (10).

10. A method as claimed in claim 9, further comprising the step of trimming off excess insert (66) extending radially outwardly of the mould cavity.

## Patentansprüche

1. Umspritzformwerkzeug (10) zum Formen eines ringförmigen geformten Abschnitts (22) auf einen Einsatz (18), wobei das Formwerkzeug eine Vielzahl von Formteilen (12, 14) und Mittel zum Aufbringen von Druck (25) auf die Formteile umfasst;
wobei jedes Formteil (12, 14) komplementär gestaltete Passflächen (16) umfasst und dazu angepasst ist, zusammengesetzt zu werden, um eine ringförmige Formhöhlung (20) zu bilden, die mindestens eine Passfläche kreuzt, um die Gestalt des geformten Abschnitts (22) zu definieren;
wobei die Passflächen (16), wenn die Form geschlossen ist, um einen Abstand voneinander beabstandet bleiben, der gleich der Dicke (28) des Einsatzes (18) ist, um eine Einsatzaufnahmehöhlung (15) zum Aufnehmen eines Abschnitts des Einsatzes zu definieren; und wobei
die Einsatzaufnahmehöhlung (15) einen dichtenden Abschnitt (17) umfasst, der sich zur dichtenden Aufnahme eines Abschnitts des Einsatzes (18) von der ringförmigen Formhöhlung (20) radial nach innen und nach außen erstreckt, wobei der dichtende Abschnitt dazu angepasst ist, wenn Druck auf die Formteile aufgebracht wird, einen im Wesentlichen gleichmäßig verteilten Druck über einem Bereich derselben auszuüben, und wobei der dichtende Abschnitt (17) eine nichtlineare oder flächige Kontaktregion umfasst.

2. Formwerkzeug nach Anspruch 1, wobei der im Wesentlichen gleichmäßig verteilte Druck nicht ausreicht, um den Einsatz (18) maßgeblich zu verformen.

3. Formwerkzeug nach einem der vorangehenden Ansprüche, wobei der Kontaktbereich (17) gerippt, gezahnt oder wellig ist.

4. Formwerkzeug nach Anspruch 3, wobei die Oberfläche des Kontaktbereichs (17) der Oberfläche eines gefalteten Einsatzes entspricht.

5. Formwerkzeug nach Anspruch 4, wobei die Falten im Wesentlichen parallel sind.

6. Formwerkzeug nach einem der vorangehenden Ansprüche, wobei die Formteile (12, 14) in beabstandete Nebeneinanderstellung bewegt werden können und wobei die Einsatzaufnahmehöhlung (15) von dem Zwischenraum zwischen den beabstandeten Passflächen der Formteile gebildet wird.

7. Formwerkzeug nach einem der vorangehenden Ansprüche, wobei die Formhöhlung (20) einen endlosen Ring umfasst.

8. Formwerkzeug nach einem der vorangehenden Ansprüche, weiter umfassend einen mit dem Inneren der Formhöhlung (15) in Verbindung stehenden Einlasskanal (24), durch den erstarrungsfähiges flüssiges Polymer eingespritzt werden kann.

9. Verfahren zum Umspritzformen, insbesondere eines Filtereinsatzes (5), das folgende Schritte umfasst:
Bereitstellen einer Vielzahl von Formteilen (12, 14), die jeweils Folgendes aufweisen: komplementär gestaltete Passflächen (16) und eine in mindestens einer Passfläche gebildete Formhöhlungsaussparung, um eine ringförmige Formhöhlung (20) zu definieren, wobei, wenn die Form geschlossen ist, die Passflächen (16) um einen Abstand voneinander beabstandet bleiben, der gleich der Dicke (28) des Einsatzes (18) ist, um eine Einsatzaufnahmehöhlung (15) zum Aufnehmen eines Abschnitts des Einsatzes (18) zu definieren, wobei die Einsatzaufnahmehöhlung (15) die Formhöhlung kreuzt und einen dichtenden Abschnitt (17) umfasst, der dazu angepasst ist, in Gebrauch das Austreten von Formmaterial aus der Formhöhlung zu verhindern, wobei sich der dichtende Abschnitt (17) zur dichtenden Aufnahme eines Abschnitts des Einsatzes (18) von der ringförmigen Formhöhlung (20) radial nach innen und nach außen erstreckt;
Platzieren eines Einsatzes (18) zwischen den Formteilen (12, 14);
Bringen der Formteile (12, 14) in beabstandete Nebeneinanderstellung auf gegenüberliegenden Seiten des Einsatzes (18), wobei ein Abschnitt der Passfläche jedes Formteils in Flächenkontakt mit einer oberen oder unteren Oberfläche des Einsatzes gelangt;
Aufbringen einer Anpresskraft über dem mit dem Einsatz (18) in Kontakt befindlichen Bereich der Passflächen; und
mindestens teilweise Füllen der Formhöhlung (20) mit einem erstarrungsfähigen flüssigen Polymer;
Erstarren lassen des Polymers; und
Entnehmen des Filtereinsatzes (5) aus dem Formwerkzeug (10).

10. Verfahren nach Anspruch 9, weiter umfassend den Schritt des Abschneidens von Überschuss des Einsatzes (66), der sich von der Formhöhlung radial nach außen erstreckt.

## Revendications

1. Outil de moulage par insertion (10) servant à mouler une partie moulée annulaire (22) sur un insert (18), l'outil de moulage comportant une pluralité de pièces de moule (12, 14) et un moyen servant à appliquer de la pression (25) sur les pièces de moule ;
chaque pièce de moule (12, 14) comportant des surfaces d'accouplement de forme complémentaire (16) et étant adaptée pour être assemblée pour définir une cavité de moule annulaire (20) croisant au moins une surface d'accouplement pour définir la forme de la partie moulée (22) ;
dans lequel les surfaces d'accouplement (16), quand le moule est fermé, restent espacées les unes des autres selon une distance qui est la même que l'épaisseur (28) de l'insert (18) pour définir une cavité de réception d'insert (15) servant à recevoir une partie de l'insert ; et dans lequel
la cavité de réception d'insert (15) comporte une partie d'étanchéité (17) s'étendant dans le sens radial vers l'intérieur et vers l'extérieur de la cavité de moule annulaire (20) servant à des fins de réception étanche d'une partie de l'insert (18), la partie d'étanchéité étant adaptée, quand la pression est appliquée sur les pièces de moule, pour exercer une pression distribuée de manière sensiblement uniforme en travers d'une surface de celles-ci et dans lequel la partie d'étanchéité (17) comporte une région de contact non linéaire, ou aréale.

2. Outil de moulage selon la revendication 1, dans lequel la pression distribuée de manière sensiblement uniforme est insuffisante pour déformer l'insert (18) de manière significative.

3. Outil de moulage selon l'une quelconque des revendications précédentes, dans lequel la zone de contact (17) est nervurée, striée ou ondulée.

4. Outil de moulage selon la revendication 3, dans lequel la surface de la zone de contact (17) correspond à la surface d'un insert plissé.

5. Outil de moulage selon la revendication 4, dans lequel les plis sont sensiblement parallèles.

6. Outil de moulage selon l'une quelconque des revendications précédentes, dans lequel les pièces de moule (12, 14) sont en mesure de se déplacer en une juxtaposition espacée les unes des autres et dans lequel la cavité de réception d'insert (15) est formée par l'espace entre les surfaces d'accouplement espacées les unes des autres des pièces de moule.

7. Outil de moulage selon l'une quelconque des revendications précédentes, dans lequel la cavité de moule (20) comporte un anneau continu.

8. Outil de moulage selon l'une quelconque des revendications précédentes, comportant par ailleurs un orifice d'entrée (24) en communication avec la partie intérieure de la cavité de moule (15) au travers duquel un polymère liquide en mesure de se solidifier est injectable.

9. Procédé de moulage par insertion, en particulier une cartouche filtrante (5), comportant les étapes consistant à :
mettre en œuvre une pluralité de pièces de moule (12, 14) ayant chacune : des surfaces d'accouplement de forme complémentaire (16) et un évidement de cavité de moule formé dans au moins une surface d'accouplement pour définir une cavité de moule annulaire (20), dans lequel, quand le moule est fermé, les surfaces d'accouplement (16) restent espacées les unes des autres selon une distance qui est la même que l'épaisseur (28) de l'insert (18) pour définir une cavité de réception d'insert (15) servant à recevoir une partie de l'insert (18) ; la cavité de réception d'insert (15) croisant la cavité de moule et comportant une partie d'étanchéité (17) adaptée pour inhiber, lors de l'utilisation, toute sortie du matériau de moulage en provenance de la cavité de moule, la partie d'étanchéité (17) s'étendant dans le sens radial vers l'intérieur et vers l'extérieur de la cavité de moule annulaire (20) à des fins de réception étanche d'une partie de l'insert (18) ;
positionner un insert (18) entre les pièces de moule (12, 14) ;
placer les pièces de moule (12, 14) en une juxtaposition espacée les unes des autres sur des côtés opposés de l'insert (18) avec une partie de la surface d'accouplement de chaque pièce de moule pour réaliser un contact aréal avec une surface supérieure ou inférieure de l'insert ;
appliquer une force à pression sur la zone des surfaces d'accouplement en contact avec l'insert (18) ; et
remplir au moins partiellement la cavité de moule (20) au moyen d'un polymère liquide en mesure de se solidifier ;
laisser le polymère se solidifier ; et
retirer la cartouche filtrante (5) de l'outil de moulage (10).

10. Procédé selon la revendication 9, comportant par ailleurs l'étape consistant à ébarber tout insert en excès (66) s'étendant dans le sens radial vers l'extérieur de la cavité de moule.
